# EUROPÄISCHE PATENTSCHRIFT

(11) **EP 0 974 489 B1**
(45) Veröffentlichungstag und Bekanntmachung des Hinweises auf die Patenterteilung: **11.12.2002**
(21) Anmeldenummer: 99111456.2
(22) Anmeldetag: 12.06.1999
(51) Int. Cl.: B60R 11/02

(54) **Bassreflexbox einer Radio-Soundanlage eines Personenkraftfahrzeuges**
Vehicle radio-sound apparatus bass reflex box
Enceinte bass reflex d'une installation radio-sonore d'un véhicule

(30) Priorität: 21.07.1998 DE 19832623; 29.04.1999 DE 19919456
(43) Veröffentlichungstag der Anmeldung: 26.01.2000
(73) Patentinhaber: DaimlerChrysler AG, 70567 Stuttgart (DE)
(72) Erfinder: Hönninger, Anton, 97922 Lauda-Königshofen (DE); Kübler, Karl, 71691 Freiberg (DE)

(56) Entgegenhaltungen:
- EP-A- 0 252 522
- EP-A- 0 653 331
- US-A- 5 218 175
- PATENT ABSTRACTS OF JAPAN vol. 012, no. 328 (E-654), 6. September 1988 (1988-09-06) & JP 63 090993 A (MATSUSHITA ELECTRIC IND CO LTD), 21. April 1988 (1988-04-21)
- PATENT ABSTRACTS OF JAPAN vol. 017, no. 670 (C-1139), 9. Dezember 1993 (1993-12-09) & JP 05 220041 A (MATSUSHITA ELECTRIC IND CO LTD), 31. August 1993 (1993-08-31)
- PATENT ABSTRACTS OF JAPAN vol. 018, no. 397 (E-1583), 26. Juli 1994 (1994-07-26) & JP 06 113382 A (MATSUSHITA ELECTRIC IND CO LTD), 22. April 1994 (1994-04-22)

## Beschreibung

Die Erfindung betrifft eine Baßreflexbox einer Radio-Soundanlage eines Personenkraftfahrzeuges.

Eine Baßreflexbox gemäß dem Oberbegriff des Anspruchs 1 ist aus der US-A- 5,218,175 bekannt.

Baßreflexboxen benötigen ein relativ großes Einbauvolumen, für das in dem Innenraum eines Personenkraftfahrzeuges häufig nicht genügend Raum zur Verfügung steht. Bei einem Wunsch nach einem kräftigen Baß der Soundanlage für Fahrer und Beifahrer benötigt eine im Fond einer Fahrzeugkabine angeordnete Baßreflexbox ein Volumen in der Größenordnung von mindestens 15 Litern.

Die Erfindung beschäftigt sich mit dem Problem, in dem Kabinenraum eines Personenkraftfahrzeuges eine relativ großvolumige Baßreflexbox ohne eine damit als störend verbundene Innenraum- bzw. Stauraumverkleinerung unterzubringen. Dabei soll darüber hinaus ein Ort für die Unterbringung gewählt werden, an dem eine möglichst gute Soundwirkung für die Fahrzeuginsassen gegeben ist.

Gelöst wird dieses Problem erfindungsgemäß durch eine Anordnung der Baßreflexbox nach den kennzeichnenden Merkmalen des Patentanspruchs 1.

Zweckmäßige Ausgestaltungen sind Gegenstand der Unteransprüche.

Die Erfindung beruht auf dem allgemeinen Gedanken, für den Einbau der Baßreflexbox einen Ort zu wählen, an dem einerseits ein den Kabineninnen- bzw. Stauraum nicht verkleinernder Raum zur Verfügung steht und an dem andererseits eine optimale Soundwirkung für die Fahrzeuginsassen erzeugt werden kann. Besonders raumsparend ist die Unterbringung einer erfindungsgemäßen Baßreflexbox, wenn diese selbst die Funktion des frontalen Fußabstützbereiches innerhalb des Beifahrer-Fußraumes ausübt. Dabei kann diese Box von einem Bodenteppich abgedeckt sein, wobei dieser sogar in die Oberfläche der Box integriert sein kann. Bei geschickter Ausbildung kann in diesem Fall eine üblicherweise in dem frontalen Fußabstützbereich unterhalb des Bodenteppichbelages vorgesehene Prallenergie aufzehrende Zwischenschicht zumindest weitestgehend entfallen. Die Baßreflexbox kann insgesamt als Crashelement ausgebildet sein, so daß sie im Crashfall energieaufzehrend wirkt.

Ein nachstehend noch näher beschriebenes Ausführungsbeispiel der Erfindung ist in der Zeichnung dargestellt.

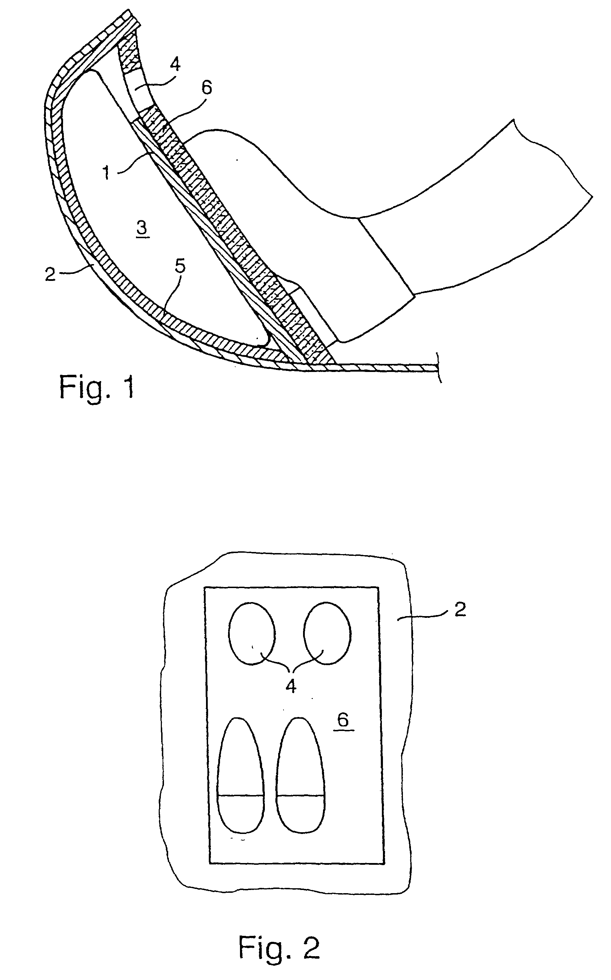

In dieser zeigen
- Fig. 1: einen Schnitt in Fahrzeuglängsrichtung durch den Bereich einer Fußabstützplatte im Beifahrerbereich eines Personenkraftwagens mit einer nicht geschnitten dargestellten Baßreflexbox,
- Fig. 2: eine Ansicht der Fußabstützplatte vom Kabineninnenraum aus.

Eine Fußabstützplatte 1 ist mit Abstand vor einer den Motorraum von dem Kabineninnenraum eines Personenkraftfahrzeuges trennenden Stirnwand 2, die kabineninnenraumseitig mit einer Dämpfungsschicht 5 abgedeckt ist, angebracht. Der sich durch diese Art der Anbringung ergebende keilförmige Zwischenraum zwischen der Fußabstützplatte 1 und der Dämpfungsschicht 5 der Stirnwand 2 dient als Raum für die Unterbringung einer Baßreflexbox 3. Eine solche Baßreflexbox 3 mit beispielsweise einem Volumen von 10 Liter ist bezüglich ihrer Außenabmessung genau auf den zur Verfügung stehenden Einbauraum ausgelegt, so daß ein etwa formschlüssiger Einbau innerhalb des Freiraumes zwischen der Fußabstützplatte 1 und der Stirnwand 2 gegeben ist. Die Soundausgänge der Baßreflexbox 3 sind über zwei Öffnungen 4 in einem die Fußabstützplatte 1 abdeckenden Teppichbelag 6 gegeben. Diese Öffnungen 4 liegen in einem die Fußabstützplatte 1 oben überragenden Bereich des Teppichbelages 6 und münden dort in den Fahrgastraum. Durch die Anordnung einer Baßreflexbox 3 in dem Fußraum des vorderen Beifahrers ist mit einem Baßreflexbox-Volumen von etwa 10 Litern eine optimale Soundwirkung innerhalb der Fahrzeugkabine erreichbar, wie sie bei der Anordnung der Baßreflexbox im Fond der Fahrzeugkabine erst mit einem Baßreflexbox-Volumen von mindestens 15 Litern erreichbar wäre.

Bei einem ausreichend groß auslegbaren Einbauraum unterhalb der Fußabstützplatte 1 kann der Soundverstärker der Radio-Soundanlage in die Baßreflexbox integriert bzw. zusammen mit dieser in dem Raum unterhalb der Fußabstützplatte 1 untergebracht sein.

Bei einer entsprechend stabilen Auslegung kann die bei der vorstehend beschriebenen Baßreflexbox vorgelagerte Fußabstützplatte entfallen. In diesem Fall dient die Baßreflexbox selbst als frontaler Fußabstützbereich. Dieser Bereich kann wie üblich mit einem Bodenteppich abgedeckt sein. Dabei kann wie ebenfalls bisher üblich eine stoßenergieabsorbierende Zwischenschicht zwischen dem Teppich und der Baßreflexbox vorgesehen sein. Diese Zwischenschicht kann allerdings auch in den Bodenbelag und/oder in die Baßreflexbox integriert sein. Auch kann der Bodenbelag mit oder ohne Zwischenschicht insgesamt in die Oberfläche der Baßreflexbox integriert sein.

## Patentansprüche

1. Baßreflexbox einer Radio-Soundanlage innerhalb einer Personenkraftfahrzeug-Kabine, mit in das Kabineninnere führenden Baß-Ausgangsöffnungen (4),
**dadurch gekennzeichnet,**
**daß** die Baßreflexbox (3) in dem Beifahrer-Fußraumbereich an die die Fahrzeugkabine von dem Motorraum trennende Stirnwand (2) angrenzend angeordnet ist und daß die Baßreflexbox (3) die Baß-Ausgangsöffnungen (4) im oberen, von den Füßen des Beifahrers in der Regel nicht beaufschlagten Bereich aufweist.

2. Baßreflexbox nach Anspruch 1,
**dadurch gekennzeichnet,**
**daß** die Baßreflexbox (3) über Dämmaterial (5) an die Stirnwand (2) angrenzt.

3. Baßreflexbox nach einem der vorhergehenden Ansprüche,
**dadurch gekennzeichnet,**
**daß** die Baßreflexbox (3) innerhalb des Beifahrer-Fußraumes den frontalen Fußabstützbereich bildet.

4. Baßreflexbox nach Anspruch 1 oder 2,
**dadurch gekennzeichnet,**
**daß** innerhalb des Beifahrer-Fußraumes der Fußabstützbereich von einer der Baßreflexbox (3) vorgelagerten und außerhalb dieser befestigten Fußabstützplatte (1) gebildet ist.

5. Baßreflexbox nach einem der vorhergehenden Ansprüche,
**dadurch gekennzeichnet,**
**daß** die Außenform der Baßreflexbox (3) keilförmig mit dem dicken Keilbereich nach oben weisend ausgebildet ist.

6. Baßreflexbox nach einem der vorhergehenden Ansprüche,
**dadurch gekennzeichnet,**
**daß** die Baßreflexbox (3) als Crashelement energieaufzehrend verformbar ausgebildet ist.

## Claims

1. Bass-reflex box of a radio sound system inside the interior of a passenger vehicle with bass output openings (4) leading into the passenger compartment,
**characterised in that**
the bass-reflex box (3) is disposed in the passenger foot well adjoining the front wall (2) separating the passenger compartment from the engine compartment and the bass-reflex box (3) has bass output openings (4) in the upper region that as a rule is not likely to come into contact with the feet of the passenger.

2. Bass-reflex box as claimed in claim 1,
**characterised in that**
the bass-reflex box (3) abuts with the front wall (2) via damping material (5).

3. Bass-reflex box as claimed in one of the preceding claims,
**characterised in that**
the bass-reflex box (3) forms the front foot support region within the passenger foot well.

4. Bass-reflex box as claimed in claim 1 or 2,
**characterised in that**
the foot support region within the passenger foot well is formed by a foot support plate (1) mounted in front of the bass-reflex box (3) and attached to the outside thereof.

5. Bass-reflex box as claimed in one of the preceding claims,
**characterised in that**
the external shape of the bass-reflex box (3) is wedge-shaped with the thick part of the wedge pointing upwards.

6. Bass-reflex box as claimed in one of the preceding claims,
**characterised in that**
the bass-reflex box (3) is designed as an energy-absorbing, deformable crash element.

## Revendications

1. Enceinte bass-reflex d'une installation radio-sonore à l'intérieur de l'habitacle d'un véhicule automobile de tourisme, avec des orifices de sortie des basses menant à l'intérieur de l'habitacle (4),
**caractérisée en ce que** l'enceinte bass-reflex (3) est placée dans la zone de l'espace pour les pieds du passager, de façon contiguë à la paroi avant (2) qui sépare l'habitacle du véhicule de l'espace moteur, et que l'enceinte bass-reflex (3) présente les orifices de sortie des basses (4) dans la zone supérieure, en règle générale dégagée non sollicitée par les pieds du passager.

2. Enceinte bass-reflex selon la revendication 1, **caractérisée en ce que** l'enceinte bass-reflex (3) est contiguë à la paroi avant (2) par l'intermédiaire de matériau isolant (5).

3. Enceinte bass-reflex selon l'une des revendications précédentes, **caractérisée en ce que** l'enceinte bass-reflex (3) forme la zone frontale d'appui des pieds à l'intérieur de l'espace pour les pieds du passager.

4. Enceinte bass-reflex selon la revendication 1 ou 2, **caractérisée en ce que** la zone d'appui des pieds est formée, à l'intérieur de l'espace pour les pieds du passager, par une plaque d'appui des pieds (1) située devant l'enceinte bass-reflex (3) et fixée à l'extérieur de cette dernière.

5. Enceinte bass-reflex selon l'une des revendications précédentes, **caractérisée en ce que** la forme extérieure de l'enceinte bass-reflex (3) est agencée en forme de coin, avec la zone épaisse du coin tournée vers le haut.

6. Enceinte bass-reflex selon l'une des revendications précédentes, **caractérisée en ce que** l'enceinte bass-reflex (3) est conçue déformable en absorbant de l'énergie comme un élément de collision.
